Europäisches Patentamt

European Patent Office

Office européen des brevets

(19)

(11) **EP 1 734 391 A1**

(12) **EUROPEAN PATENT APPLICATION**

(43) Date of publication:
**20.12.2006 Bulletin 2006/51**

(51) Int Cl.:
*G02B 6/34* (2006.01)

(21) Application number: **05021204.2**

(22) Date of filing: **28.09.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **16.06.2005 JP 2005176670**

(71) Applicant: **FUJITSU LIMITED**
**Kawasaki-shi,**
**Kanagawa 211-8588 (JP)**

(72) Inventor: **Izumi, Hirotomo**
**-ku**
**Kawasaki-shi**
**Kanagawa 211-8588 (JP)**

(74) Representative: **HOFFMANN EITLE**
**Patent- und Rechtsanwälte**
**Arabellastrasse 4**
**81925 München (DE)**

(54) **Variable dispersion compensator**

(57)     An optical apparatus is disclosed. After converting the incident light into parallel light by a collimator lens (40), the parallel light is condensed by a line focus lens (51) and applied to a VIPA plate (10). The focal length of the line focus lens is longer than the one in the prior art, and therefore, the light beam incident to the VIPA plate changes less in beam diameter while increasing the emitting beam diameter. As a result, the light of the unrequired order of interference contained in the light emitted from the VIPA plate is suppressed, and energy is concentrated on the light of the required order of interference, thereby making it possible to reduce the insertion loss of the variable dispersion compensator.

## FIG.1

FIRST EMBODIMENT OF THE INVENTION

EP 1 734 391 A1

## Description

BACKGROUND OF THE INVENTION

### 1. Field of the Invention

This invention relates to a variable dispersion compensator to variably compensate for the chromatic dispersion accumulated in the optical signal propagating through an optical fiber transmission path for optical communication, or in particular to a variable dispersion compensator to generate a variable chromatic dispersion using an optical part having the function to demultiplex the input light in accordance with the wavelength thereof.

### 2. Description of the Related Art

One of the conventional variable dispersion compensators that has been proposed is configured of what is called the virtually imaged phase array (VIPA) in which the wavelength division multiplexed (WDM) light is split into a plurality of optical beams spatially distinguishable from each other in accordance with the wavelength (for example, see reference 1, i.e. Japanese Patent Application National Publication No. 2000-511655, and reference 2, i.e. Japanese Patent Application National Publication No. 2002-514323).

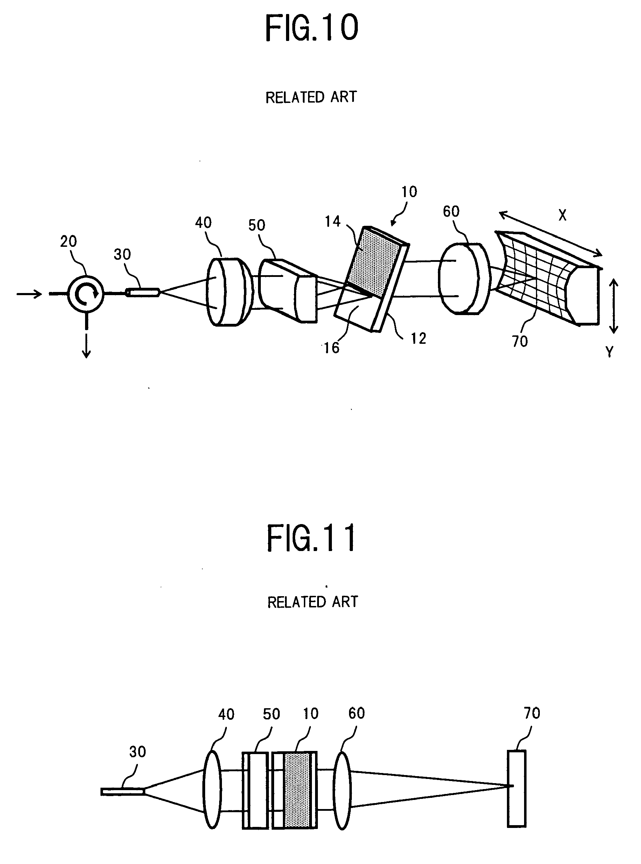

Fig. 10 is a perspective view showing an example of a configuration of the conventional VIPA variable dispersion compensator. Fig. 11 is a top plan view of the example configuration.

As shown in these drawings, in the conventional VIPA variable dispersion compensator, for example, the light emitted from an end of an optical fiber 30 through an optical circulator 20 is converted into parallel light by a collimator lens 40, and then condensed on one line segment by a line focus lens 50 and enters the space between parallel opposed planes through a window 16 of a VIPA plate 10. The light incident to the VIPA plate 10 repeats multiple reflection between a reflection multilayer film 12 formed on one flat surface of the VIPA plate 10 and having a reflectivity lower than 100 % and a reflection multilayer film 14 formed on the other flat surface and having the reflectivity of about 100 %. Each time the light is reflected on the surface of the reflection multilayer film 12, several percent of the light is transmitted through the reflection surface and emitted out of the VIPA plate 10.

The lights that have been transmitted through the VIPA plate 10 interfere with each other and produce a plurality of optical beams having different directions in accordance with the difference in the wavelengths. As a result, once the optical beams are condensed at a point by a convergent lens 60, each condensation point moves along a straight line with the change in wavelength. In the case where a three-dimensional mirror 70 is placed on this straight line, for example, the light emitted from the VIPA plate 10 and condensed by the convergent lens 60 is reflected at a different position on the three-dimensional mirror 70 in accordance with the wavelength and returned to the VIPA plate 10. The light reflected on the three-dimensional mirror 70 proceeds in a different direction for a different wavelength, and the return light path to the VIPA plate 10 is different. By changing the amount of this light path difference with changing wavelength, a different wavelength component propagates over a different distance thereby to compensate for the chromatic dispersion of the input light.

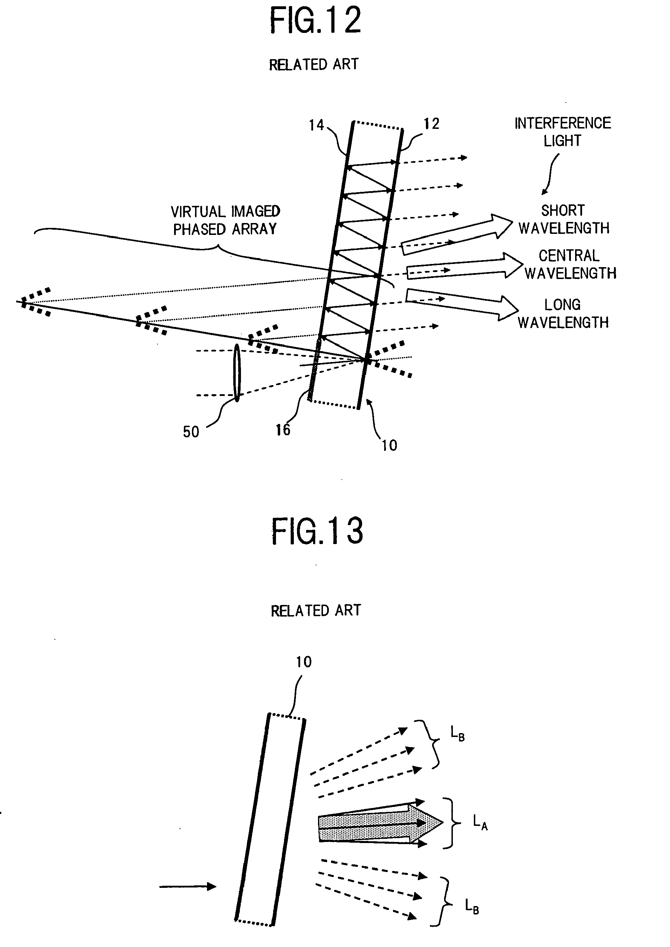

The light reflected multiple ways on the VIPA plate 10 behaves similarly to, for example, the light in the echelon grating well known as a stepped diffraction grating in an assumed model shown in Fig. 12. Therefore, the VIPA plate can be considered a virtual diffraction grating. In the VIPA plate 10, as shown on the right side of Fig. 12, the emitted light interfere with each other on condition that a short wavelength component is emitted on the side above the optical axis and a long wavelength component on the side below the optical axis. Therefore, the short wavelength component of the optical signal of each wavelength is emitted above the optical axis, and the long wavelength component under the optical axis. This conventional VIPA variable dispersion compensator can compensate for the chromatic dispersion over a wide range. Another advantage of this conventional VIPA chromatic dispersion compensator is that the transmission band of the periodically generated light is shifted along the wavelength axis by temperature adjustment, thereby making it possible to change the wavelength (transmitted wavelength) of the optical signal to be compensated for.

The problem of this conventional VIPA variable dispersion compensator described above, however, is that the insertion loss is increased by the light having the unrequired order of diffraction emitted from VIPA.

Specifically, the light of various orders of diffraction are emitted from the VIPA providing a virtual diffraction grating as described above. As shown in the schematic diagram of Fig. 13, the light emitted from the VIPA contains the light $L_B$ of the unrequired order of diffraction in addition to the light $L_A$ of the order of diffraction required to split the input light in accordance with the wavelength. The light $L_B$ of the unrequired order of diffraction causes the disturbance of the main light $L_A$ of the required order of diffraction. Emission of an increased amount of light $L_B$ of the unrequired order of diffraction would increase the proportion of the light incident to the VIPA which is discarded as the unrequired light, thereby leading to an increased insertion loss.

## SUMMARY OF THE INVENTION

This invention has been achieved in view of the problem points described above, and the object thereof is to provide a variable dispersion compensator using the VIPA for reducing the insertion loss.

In order to achieve this object, according to this invention, there is provided a variable dispersion compensator comprising: an optical system for condensing the input light in one-dimensional direction; an optical part having the demultiplexing function, including two opposed parallel flat surfaces, in which one of the parallel flat surfaces is formed with a window and a first reflection surface, the other of the parallel flat surfaces is formed with a second reflection surface, the light condensed in one-dimensional direction by the optical system enters the space between the first and second reflection surfaces through the window, the incident light is reflected multiple times on the reflection surfaces and partly emitted through the second reflection surface, and the emitted light interfere with each other thereby to form optical beams proceeding in different directions with different wavelengths; and a reflector for reflecting the optical beams of different wavelengths emitted in different directions from the second reflection surface of the optical part and returning the optical beams to the optical part. The optical system has such an optical characteristic that the magnification ratio of the incident beam diameter to the emitting beam diameter becomes to be a value approximate to a predetermined target value corresponding to the refractive index of the optical part, the incident beam diameter indicating the length of the overlapped portion between the window of the optical part and the beam section along the plane perpendicular to the one-dimensional direction of the light beam entering the optical part, the emitting beam diameter indicating the length of the overlapped portion between the beam section and the second reflection surface of the optical part.

In the variable dispersion compensator described above, the light condensed in one-dimensional direction by the optical system enters the optical part, i.e. the VIPA having the function to demultiplex the input light in accordance with the wavelength. The optical system is so designed that the magnification ratio between the diameter of the light beam incident to the optical part from the optical system and the diameter of the light beam emitted from the optical part in terms of the cross section of the beam in the plane perpendicular to the one-dimensional direction in which the light is condensed becomes a value approximate to a predetermined target value. As compared with the incident beam in the prior art, therefore, the beam diameter in the optical part undergoes a smaller change and the emitting beam diameter is increased. As a result, the light of the unrequired order of diffraction contained in the light emitted from the optical part is suppressed, and energy can be concentrated on the light having the required order of diffraction.

According to the invention described above, the diffraction efficiency of the light emitted from the optical part is improved, and therefore the insertion loss of the variable dispersion compensator can be reduced.

The above and other objects, features and advantages will be made apparent by the detailed description taken in conjunction with the accompanying drawings described below.

BRIEF DESCRIPTION OF THE DRAWINGS

Fig. 1 is a side view showing a configuration of a VIPA variable dispersion compensator according to a first embodiment of the invention.

Fig. 2 is a diagram for explaining the optical design concept of VIPA for the conventional VIPA variable dispersion compensator.

Fig. 3 is a diagram for explaining the relation between the widths of the grooves of the normal diffraction grating the expansion of light.

Fig. 4 is a diagram for explaining the relation between the beam diameter of the light incident to the VIPA plate and the loss.

Fig. 5 is a diagram for explaining the optical design concept of VIPA for the VIPA variable dispersion compensator according to the invention.

Fig. 6 is a diagram showing an example of calculation of the relation between the magnification ratio of the incident beam diameter with respect to the emitting beam diameter and the insertion loss.

Fig. 7 is a schematic diagram for explaining the conditions for interference of the light emitted from the VIPA plate.

Fig. 8 is a side view showing a configuration of the VIPA variable dispersion compensator according to a second embodiment of the invention.

Fig. 9 is a side view showing a configuration of the VIPA variable dispersion compensator according to a third embodiment of the invention.

Fig. 10 is a perspective view showing an example of the configuration of the conventional VIPA variable dispersion compensator.

Fig. 11 is a top plan view of the example configuration shown in Fig. 10.

Fig. 12 is a diagram showing a model for explaining the operational principle of VIPA.

Fig. 13 is a schematic diagram for explaining the order of diffraction of the light emitted from the VIPA.

DETAILED DESCRIPTION OF THE INVENTION

The best mode for implementing the variable dispersion compensator according to the invention will be explained with reference to the accompanied drawings. In all the drawings, the same reference numeral designates an identical or equivalent component part.

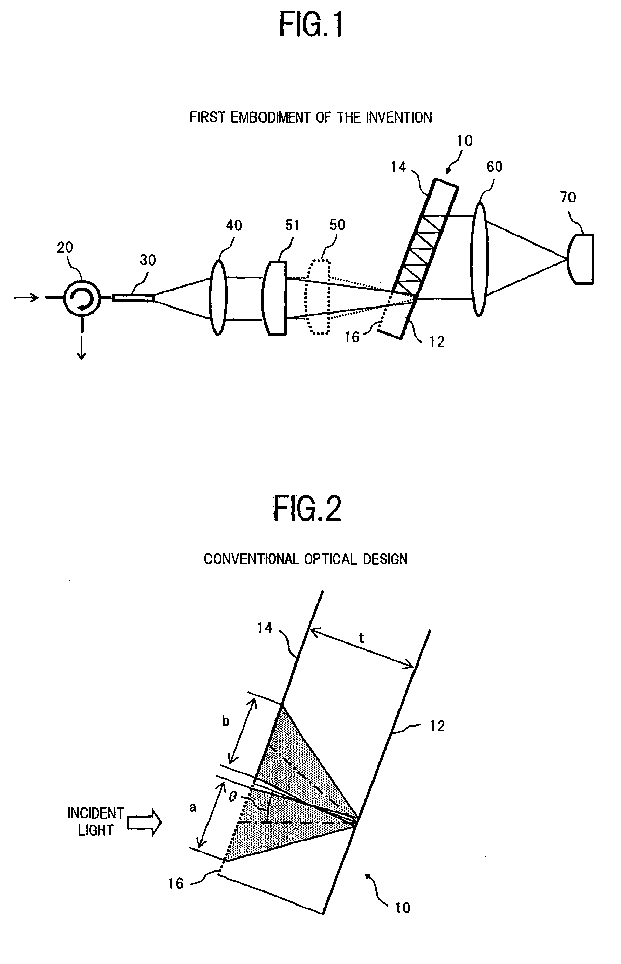

First, to help understand the invention, the optical design concept of VIPA for the conventional VIPA variable dispersion compensator is described briefly with reference to Fig. 2.

In Fig. 2, let t be the thickness of a VIPA plate 10 (distance between reflection multilayer films 12, 14), "a" the diameter of the light beam incident to a window 16, and "b" the diameter of the light beam reflected once on the reflection multilayer film 12 and returned to the reflection multilayer film 14. The light incident to the VIPA plate 10 is condensed in the one-dimensional direction perpendicular to the page in Fig. 2, and therefore the beam diameters "a", "b" correspond to the length of the overlapped portion between the section of the light beam (halftone dot meshed portion in Fig. 2) in the plane perpendicular to the one-dimensional direction and one flat surface of the VIPA plate 10 formed with the window 16 and the reflection multilayer film 14. In the process, the conditions under which the light enters the VIPA plate 10 in such a manner that the incident beam is not cut off by an end portion of the reflection multilayer film 14 adjoining the window 16 and no reflected beam leaks from the window 16 are expressed by equations (1) and (2) below.

$$t \cdot \tan\theta - a/2 \geq 0 \qquad (1)$$

$$t \cdot \tan\theta - b/2 \geq 0 \qquad (2)$$

where $\theta$ is the inclination angle of the VIPA plate 10, i.e. the angle of the VIPA plate 10 inclined from the position at which light enters in the direction perpendicular to the surface of the VIPA plate 10.

Equations (1) and (2) are combined into the relation indicated by equation (3) below.

$$t \cdot \tan\theta \geq (a + b)/4 \qquad (3)$$

Incidentally, in view of the fact that $\tan\theta$ is approximately given as $\theta$ in the range where the inclination angle $\theta$ of the VIPA plate 10 is small, the relation of equation (3) can be rewritten as equation (4) below.

$$t \cdot \theta \geq (a + b)/4 \qquad (4)$$

In the conventional VIPA variable dispersion compensator, the optical system for applying the incident light to the VIPA plate 10 is designed in such a manner as to realize the beam diameters "a", "b" meeting the relation of equation (4). In this optical design, the relation of equation (4) is introduced only to make sure that the light incident to the VIPA plate 10 enters the window 16 without being cut off by the reflection multilayer film 14, and no consideration is given to the relation between the beam diameter of the light condensed in the one-dimensional direction and entering the VIPA plate 10 and the diffraction effect.

In view of this, according to the invention, the conditions for light incidence to the VIPA plate 10 including the diffraction effects are determined, and according to these conditions, the optical design is carried out on the light incident to the VIPA plate 10 thereby to reduce the insertion loss of the VIPA variable dispersion compensator. The principle of this invention is explained in detail below.

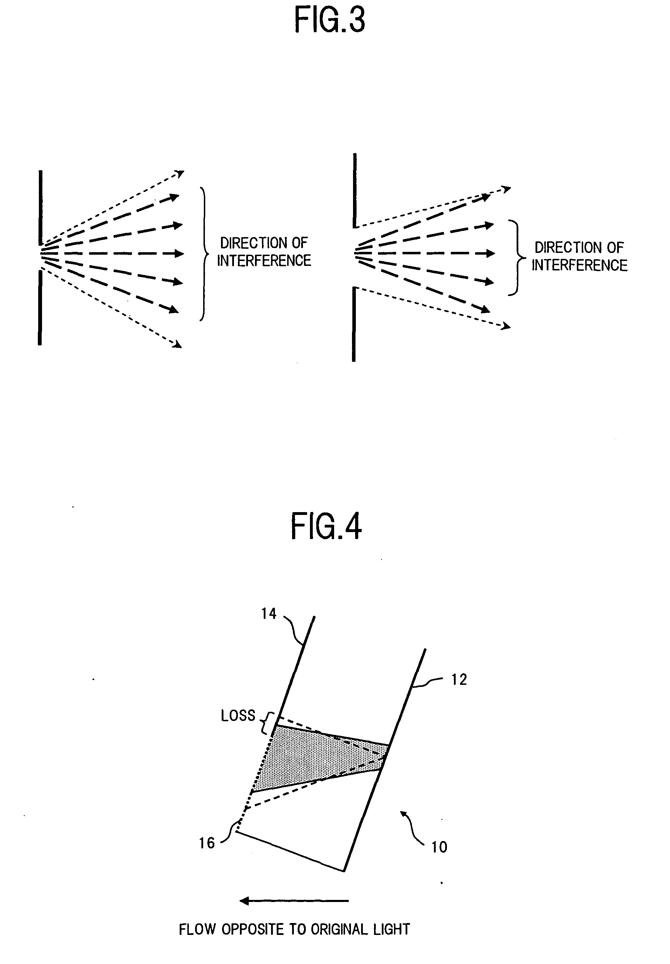

The beam diameter of the light condensed in the one-dimensional direction and incident to the VIPA plate 10 considering the operational principle of the VIPA corresponds to the parameter for determining the groove width of the normal diffraction grating. Generally, a small groove width for light passage is liable to expand the light as shown on the left side of Fig. 3, for example. As a result, in the case where the light enters the diffraction grating with a small groove width, the optical energy has a plurality of directions of propagation meeting a plurality of diffraction conditions, and therefore the light with a plurality of orders of diffraction are generated. On the other hand, with a large groove width for light passage, the light is not easily expanded as shown on the right side of Fig. 3, for example. In the case where the light enters the diffraction grating having a large groove width, therefore, the optical energy has not a plurality of directions of propagation meeting a plurality of the interference conditions, and therefore the light can be concentrated at the required order of diffraction. Specifically, the diffraction efficiency can be improved. This invention takes this phenomenon into account, and the beam diameter of the light entering the VIPA plate 10 is increased thereby to suppress the light of the unrequired order of diffraction.

In this case, as shown in Fig. 4, consider the light proceeding in the opposite direction along the propagation path after being condensed on the emission-side flat surface formed with the reflection multilayer film 12. Specifically, consider the light beam proceeding from the condensation point on the emission-side flat surface to the window 16. In the case where the beam diameter of the light condensed on the emission-side flat surface is small, as indicated by dashed line in Fig. 4, the light beam reaching the incidence-side flat surface is expanded so excessively as to be cut off by the reflection multilayer film 14. In the case where the beam diameter of the light condensed on the emission-side flat surface is excessively large, on the other hand, as indicated by solid line in Fig. 4, the light beam reaching the incidence-side flat surface is so large as to be cut off by the reflection multilayer film 14. According to the conventional optical design concept, as described above, the beam diameters a, b on the incidence-side flat surface are determined to make sure that the incident light is not cut off by the reflection multilayer film 14, and therefore, the conditions for the beam diameter of the light condensed on the emission-side flat surface through the window 16 are not taken into consideration.

According to the invention, in place of the conditions for the conventional optical design to prevent the incident light from being cut off by the reflection multilayer film 14 to suppress the loss in the VIPA plate 10, the conditions for optical design are employed in which the diffraction efficiency is improved by increasing the beam diameter of the light condensed on the emission-side flat surface to suppress the loss in the VIPA plate 10. In other words, the optical system according to the invention is optimally designed based on the idea that even in the case where the incident light is partly cut off by the reflection multilayer film 14 by increasing the beam diameter of the light condensed on the emission-side flat surface, this disadvantage is more than covered by the effect of reducing the loss by suppressing the light of the unrequired order of diffraction. This basic optical design concept of the invention can be embodied based on, for example, the theoretical equation described below.

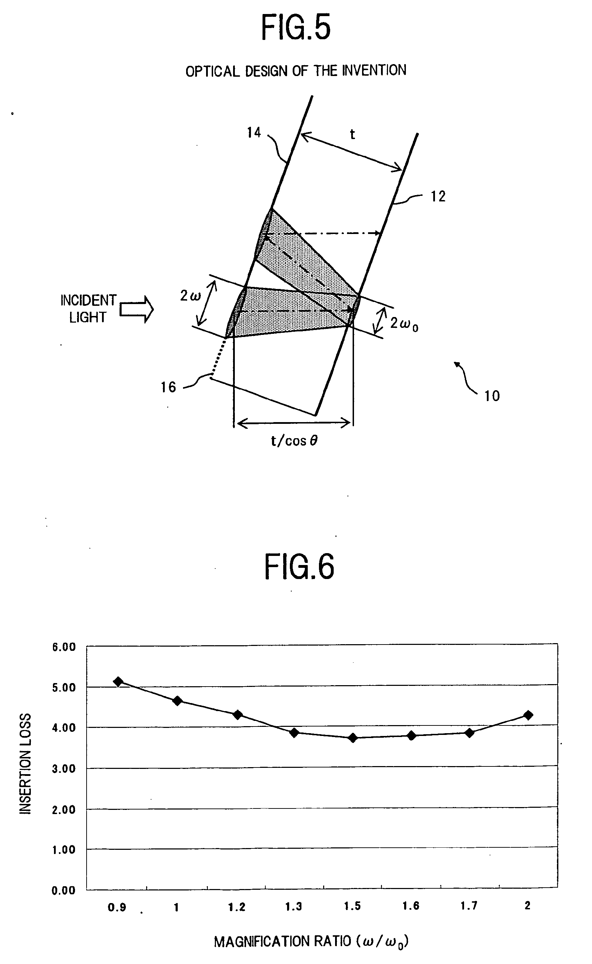

Specifically, as shown in Fig. 5, assuming that the beam diameter on the incidence-side flat surface is $2w$ and the beam diameter on the emission-side flat surface is $2\omega_0$. The relation of equation (5) holds between the beams diameters $2\omega$, $2\omega_0$ on the assumption that the two light beams are Gauss beams of zero order.

$$\omega = \omega_0 \sqrt{1 + \left( \frac{\lambda t}{\pi \cos\theta \omega_0^2} \right)^2}$$
$$= \sqrt{\omega_0^2 + \frac{\lambda^2 t^2}{\pi^2 \cos^2\theta \omega_0^2}} \quad \cdots(5)$$

The distance from the window 16 of the VIPA plate 10 to the condensing point on the emission-side flat surface is given as $t/\cos\theta$, and the conditions for minimizing the beam diameter change within the range of $t/\cos\theta$ can be determined from equation (6) for differential calculation of the value in the root symbol by considering equation (5) above as a function of $\omega_0$.

$$\omega_0 = \sqrt{\frac{\lambda t}{\pi \cos\theta}} \quad \cdots(6)$$

On the basis of equation (6) above, when the insertion loss of the VIPA variable dispersion compensator is calculated in such a manner as to increase the beam diameter, as shown by the calculation result in Fig. 6, for example, the insertion loss is seen to decrease on condition that w is about 1.5 times as large as $\omega_0$ This value, however, is only an example, and the conditions for reducing the insertion loss can be determined in accordance with the refractive index in the VIPA plate 10.

According to this invention, therefore, on the basis of a target value of the ratio of w to $\omega_0$ determined by the method described above, the optical system for applying the incident light to the VIPA plate 10 is optimized in such a manner that the beam diameter of the light condensed on the emission-side flat surface is increased while the change is small in the beam diameter within the VIPA plate 10.

As an optical system for applying the condensed light to the VIPA plate 10, various lens combinations are possible as far as the condensed beam diameter can be increased. Generally, in the case where the light having the beam diameter d is condensed by a lens, the diameter D of the condensed beam is known to be expressed by equation (7) below using the focal length f of the lens and the light wavelength $\lambda$.

$$D = \frac{2.44 \lambda f}{d} \quad \cdots(7)$$

Equation (7) above indicates that in the case where the beam diameter d of the light incident to the lens is fixed, the condensed beam diameter D can be increased by increasing the focal length of the lens. In the case where the focal length f of the lens is fixed, on the other hand, beam diameter D of the condensed light can be increased by decreasing the beam diameter of the light input to the lens. Based on these general lens characteristics, the VIPA variable dispersion compensator with the optical system thereof designed on the principle of the invention is described below with reference to embodiments thereof.

Fig. 1 is a side view showing a configuration of the VIPA variable dispersion compensator according to a first embodiment of the invention.

In Fig. 1, the VIPA variable dispersion compensator according to the first embodiment is an example in which the beam diameter of the condensed light is increased by increasing the focal length of the lens according to the general lens characteristics shown in equation (7). Specifically, in this VIPA variable dispersion compensator, in place of the line focus lens 50 included in the conventional configuration shown in Fig. 10, a line focus lens 51 having a longer focal length than the line focus lens 50 is arranged at a predetermined position between the collimator lens 40 and the VIPA plate 10. The other parts of the configuration than the line focus lens 51 are similar to the one of the prior art. In Fig. 1, the arrangement of the conventional line focus lens 50 is indicated by dotted line to facilitate comparison with the conventional configuration. Hereinafter, the optical parts making up this VIPA variable dispersion compensator will be specifically explained below.

The VIPA plate 10 includes a reflection multilayer film 12 (second reflection surface) formed on one of the opposed parallel flat surfaces of the substrate, and a reflection multilayer film 14 (first reflection surface) and a window 16 formed on the other flat surface. The VIPA plate 10 is inclined at a predetermined angle to the optical axis of the light entering the window 16 at right angles thereto. The reflection multilayer film 12 has a reflectivity less than 100 % (desirably, 95 to 98 %) against the optical signal incident from the window 16, and is formed over the whole area of one of the flat surfaces of the substrate. The reflection multilayer film 14, on the other hand, has the reflectivity of about 100 % against the optical signal incident from the window 16, and is formed in a part of the other flat surface of the substrate. The part of the other flat surface of the substrate not formed with the reflection multilayer film 14 constitutes the window 16 transparent to the optical signal.

An optical circulator 20 is an ordinary optical part having three ports, for example, to transmit the light in the directions from the first port to the second port, from the second port to the third port and from the third port to the first port. The optical signal input to the VIPA variable dispersion compensator is applied to the first port of the optical circulator 20 and sent to an end of the optical fiber 30 through the second port, while the optical signal returned to the other end of the optical fiber 30 is output from the third port as an output light of the VIPA variable dispersion compensator through the second port.

The optical fiber 30 connects an end of a single-mode fiber or the like to the second port of the optical circulator 20, and the other end of the single-mode fiber or the like is arranged in the neighborhood of the collimator lens 40. The optical fiber 30 is not limited to the type described above.

The collimator lens 40 is an ordinary lens, which converts the light beam emitted from the other end of the optical fiber 30 into parallel light and applies it to the line focus lens 51.

The line focus lens 51 condenses the parallel light from the collimator lens 40 on a line segment, and specifically includes a cylindrical lens or a refractive index dispersion lens. The line focus lens 51 has a longer focal length than the conventional line focus lens 50 described above, and is arranged at an appropriate position corresponding to the increased focal length between the collimator lens 40 and the VIPA plate 10.

The convergence lens 60 is an ordinary lens for condensing at a single point a plurality of optical beams having different directions in accordance with the difference in the wavelengths after multiple reflections in the VIPA plate 10 and emitted from the reflection multilayer film 12 while interfering with each other.

A three-dimensional mirror 70 has a three-dimensional structure having an aspheric surface. This aspheric mirror has the center axis providing a design reference along the direction perpendicular to the direction of angular dispersion of the light in the VIPA plate 10. This three-dimensional mirror 70 is placed on a moving stage, not shown, with the running axis of the moving stage and the center axis in parallel to each other.

Next, the operation of the first embodiment is explained.

In the VIPA variable dispersion compensator having the above-mentioned configuration, the WDM light propagating through an optical fiber transmission path and generating the chromatic dispersion is input to the first port of the optical circulator 20, and through the second port of the optical circulator 20, sent to the optical fiber 30. The WDM light emitted from the optical fiber 30, after being converted into parallel light through the collimator lens 40, is condensed on a line segment by the line focus lens 51, and through the window 16 of the VIPA plate 10, enters the space between the reflection multilayer films 12, 14 in opposed relation to each other. In view of the fact that the line focus lens 51 has a long focal length, the diameter of the condensed beam of the light incident to the VIPA plate 10 is larger than the one in the prior art, even though the beam diameter of the collimated light input to the line focus lens 51 remains the same as the one in the prior art.

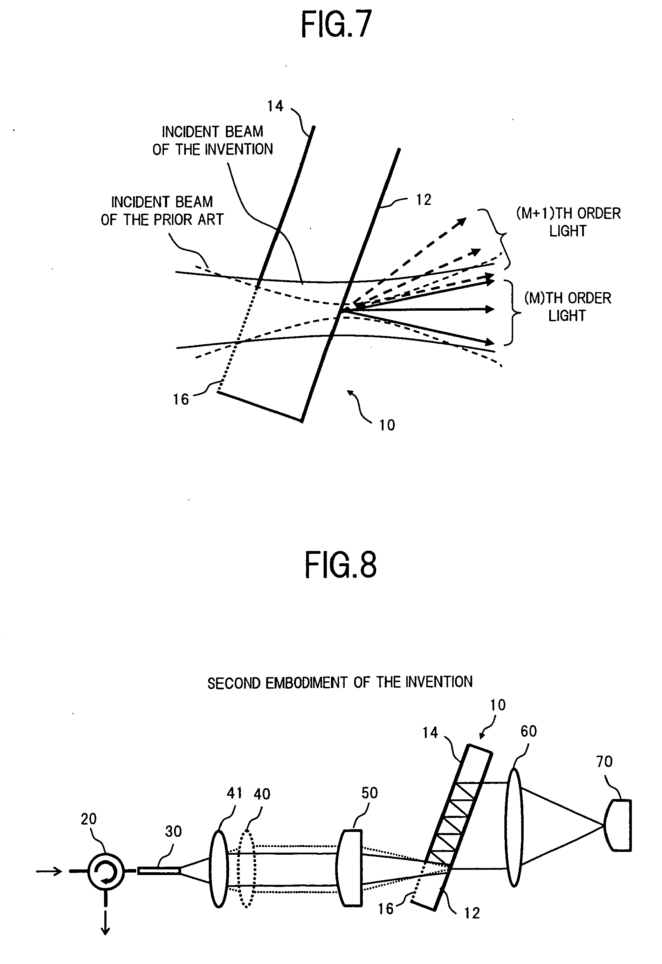

The light incident to the VIPA plate 10 repeats the multiple reflections between the reflection multilayer films 12, 14. Each time it is reflected on the reflection multilayer film 12, several percent of the light is transmitted through the reflection surface out of the VIPA plate 10. In this process, the increased diameter of the condensed beam of the light incident to the VIPA plate 10, as shown in the schematic diagram of Fig. 7, suppresses the propagation of the light of $(m + 1)$th order (the light of the unrequired order of diffraction) in the direction satisfying the conditions for interference. Thus, most of the light emitted from the VIPA plate 10 constitutes the light of $(m)$th order (the light of the required order of diffraction).

The light emitted from the VIPA plate 10 interfere with each other, and a plurality of optical beams having different directions in which they proceed are formed for different wavelengths (Fig. 12). The optical beam of each wavelength is condensed by the convergence lens 60 and reflected at a different position along Y axis (Fig. 10) on the reflection surface of the three-dimensional mirror 70. In this process, the three-dimensional mirror 70 is adjusted by the moving stage at a predetermined X-axis position corresponding to the amount of chromatic dispersion compensation.

The light reflected on the three-dimensional mirror 70 is passed through the convergence lens 60, the VIPA plate 10, the line focus lens 51, the collimator lens 40 and the optical fiber 30 in that order, and output from the third port of the optical circulator 20. As a result, the WDM light input to the VIPA variable dispersion compensator, after chromatic dispersion compensation of a predetermined amount corresponding to the position of the three-dimensional mirror 70, is output from the VIPA variable dispersion compensator.

According to the first embodiment described above, the diameter of the condensed beam of the light incident to the VIPA plate 10 is increased by use of the line focus lens 51 having a longer focal length, and therefore the light of the unrequired order of diffraction is suppressed while concentrating energy on the light of the required order of diffraction. Even in the case where the beam incident to the VIPA plate 10 is partly cut off by the reflection multilayer film 14 on the incidence side, therefore, the diffraction efficiency is improved to a degree sufficiently covering the loss, thereby making it possible to reduce the insertion loss of the VIPA variable dispersion compensator.

Next, a second embodiment of the invention will be explained.

Fig. 8 is a side view showing a configuration of the VIPA variable dispersion compensator according to the second embodiment.

In Fig. 8, the VIPA variable dispersion compensator according to the second embodiment of the invention represents an example having the ordinary lens characteristics indicated by equation (7) in which the beam diameter of the light incident to the lens is reduced while increasing the diameter of the condensed light beam. Specifically, in the VIPA variable dispersion compensator according to this embodiment, in place of the collimator lens 40 included in the conventional configuration shown in Fig. 10, a collimator lens 41 having a shorter focal length than the collimator lens 40 is arranged at a predetermined position between the optical fiber 30 and the line focus lens 50. The configuration of the other parts than the collimator lens 41 is identical to that of the prior art. In Fig. 8, the position of the conventional collimator lens 40 is shown by dotted line to facilitate comparison with the conventional configuration.

The collimator lens 41 is an ordinary lens to convert the light beam emitted from the optical fiber 30 into parallel light. The focal length of the collimator lens 41 is shorter than that of the conventional collimator lens 40, and the position of the collimator lens 41 with respect to the emitting end of the optical fiber 30 is determined in keeping with the shortened focal length thereof.

In the VIPA variable dispersion compensator having the configuration described above, the light emitted from the optical fiber 30 is converted to parallel light by the collimator lens 41 having a shorter focal length, so that the beam diameter of the parallel light entering the line focus lens 50 is smaller than the one in the prior art. Even though the focal length of the line focus lens 50 remains the same as in the conventional configuration, therefore, the beam diameter of the condensed light entering the VIPA plate 10 is larger. Thus, the VIPA variable dispersion compensator according to this embodiment produces the same effect of operation as the one in the first embodiment described above.

Next, a third embodiment of the invention is explained.

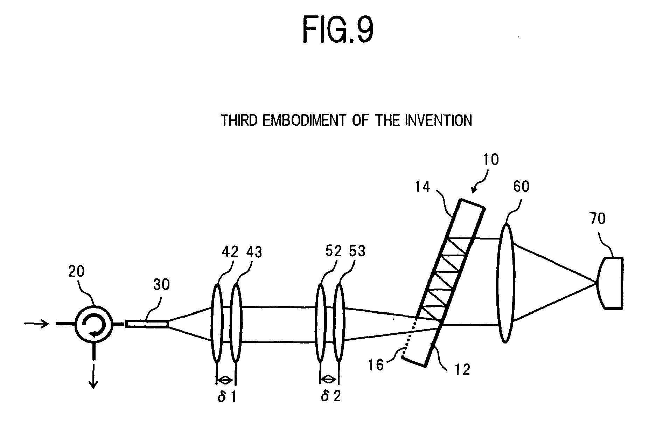

Fig. 9 is a side view showing a configuration of a VIPA variable dispersion compensator according to the third embodiment.

In Fig. 9, the VIPA variable dispersion compensator according to the third embodiment is an example of an application in which the first and second embodiments are combined using lens sets 42, 43 and 52, 53 of variable focal length as the collimator lens 41 and the line focus lens 51, respectively.

The lens set 42, 43 has the same function as the collimator lens 41 according to the second embodiment, and by changing the distance δ1 between the lenses 42, 43, the overall focal length of the lens set can be changed. In similar fashion, the lens set 52, 53 has the same function as the line focus lens 51 according to the first embodiment, and by changing the distance δ2 between the lenses 52, 53, the overall focal length of the lens set can be changed.

Generally, the focal length f of a set of two lenses is known to be given by equation (8) below.

$$\frac{1}{f} = \frac{1}{f1} + \frac{1}{f2} + \frac{\delta}{f1 \cdot f2} \quad \cdots (8)$$

where f1, f2 are the focal length of each lens, and δ the distance between the lenses.

In the VIPA variable dispersion compensator using the lens sets 42, 43 and 52, 53 described above, the diameter of the condensed beam of the light incident to the VIPA plate 10 can be finely adjusted by adjusting the distance δ1 between the lenses 42, 43 or the distance δ2 between the lenses 52, 53 and thus changing the focal length of the collimator lens or the line focus lens. This function of fine adjustment of the condensed beam diameter makes it possible to easily realize the optimum optical system with a minimum insertion loss.

A specific method of optimizing the optical system by fine adjustment of the condensed beam diameter as described above is implemented in such a manner that the position of each lens is adjusted using the fine adjustment mechanism such as an optical jig while measuring the insertion loss and fixing each lens at a position minimizing the insertion loss measurement.

Apart from the third embodiment using lens sets of two lenses as an example, lens sets of three or more lenses may be used with equal effect. Also, instead of using a lens set for both the collimator lens and the line focus lens, only one of the collimator lens and the line focus lens may be formed of a lens set for fine adjustment of the diameter of the condensed beam. Thus, a lens set can be selected appropriately in an appropriate application.

## Claims

1. An optical apparatus comprising:

   an optical system for condensing the input light in one-dimensional direction;
   an optical part having the demultiplexing function, including two opposed parallel flat surfaces, in which one of the parallel flat surfaces is formed with a window and a first reflection surface, the other of the parallel flat surfaces is formed with a second reflection surface, the light condensed in one-dimensional direction by said optical system enters the space between the first and second reflection surfaces through the window, the incident light is multiple-reflected on the reflection surfaces and partly emitted through the second reflection surface, and the emitted light interfere with each other thereby to form optical beams proceeding in different directions in accordance with the difference in the wavelengths; and
   a reflector for reflecting the optical beams of different wavelengths emitted in different directions from the second reflection surface of said optical part and returning the optical beams to said optical part;
   wherein said optical system has such an optical characteristic that the magnification ratio of the incident beam diameter to the emitting beam diameter becomes a value approximate to a predetermined target value corresponding to the refractive index of said optical part, the incident beam diameter indicating the length of the overlapped portion between the window of said optical part and the beam section along the plane perpendicular to the one-dimensional direction of the light beam entering said optical part, the emitting beam diameter indicating the length of the overlapped portion between the beam section and the second reflection surface of said optical part.

2. An optical apparatus according to claim 1, wherein said optical system has such an optical characteristic as to allow the light beam incident to said optical part to be partly cut off by being reflected at an end portion of said first reflection surface adjoining said window.

3. An optical apparatus according to claim 1, wherein said optical system is such that said target value of the magnification ratio of the incident beam diameter to the emitting beam diameter is set to about 1.5.

4. An optical apparatus according to claim 1, wherein said optical system includes a collimator lens for converting the input light to parallel light and a line focus lens for condensing the parallel light from the collimator lens in one-dimensional direction, and wherein in the case where the beam diameter of the parallel light incident to said line focus lens from said collimator lens is fixed, the focal length of said line focus lens is lengthened so that the magnification ratio of the incident beam diameter to the emitting beam diameter approaches said target value.

5. An optical apparatus according to claim 4, wherein said line focus lens is configured with a set of a plurality of lenses, and the focal length can be changed by changing the distance between the lenses.

6. An optical apparatus according to claim 1, wherein said optical system includes a collimator lens for converting the input light to parallel light and a line focus lens for condensing the parallel light from the collimator lens in one-dimensional direction, and wherein in the case where the focal length of said line focus lens is fixed, the focal length of said collimator lens is shortened so that the magnification ratio of the incident beam diameter to the emitting beam diameter approaches said target value.

7. An optical apparatus according to claim 6, wherein said collimator lens is configured of a set of a plurality of lenses, and the focal length can be changed by changing the distance between the lenses.

8. An optical apparatus according to claim 1, wherein said optical system includes a collimator lens for converting the input light to parallel light and a line focus lens for condensing the parallel light from the collimator lens in one-dimensional direction, and wherein the focal length of said collimator lens is shortened and the focal length of said line focus lens is lengthened, so that the magnification ratio of the incident beam diameter to the emitting beam diameter approaches said target value.

9. An optical apparatus according to claim 8, wherein said collimator lens and said line focus lens are each configured of a set of a plurality of lenses, and the focal length of said collimator lens and the focal length of said line focus lens can be changed by changing the distance between the lenses.

# FIG.1

FIRST EMBODIMENT OF THE INVENTION

# FIG.2

CONVENTIONAL OPTICAL DESIGN

# FIG.3

DIRECTION OF
INTERFERENCE

DIRECTION OF
INTERFERENCE

# FIG.4

14

12

LOSS

16

10

FLOW OPPOSITE TO ORIGINAL LIGHT

# FIG.5

OPTICAL DESIGN OF THE INVENTION

# FIG.6

MAGNIFICATION RATIO ($\omega / \omega_0$)

# FIG.7

14

INCIDENT BEAM
OF THE INVENTION

INCIDENT BEAM
OF THE PRIOR ART

12

(M+1)TH ORDER
LIGHT

(M)TH ORDER
LIGHT

16

10

# FIG.8

SECOND EMBODIMENT OF THE INVENTION

10

14        60

70

20        30        41  40        50

16        12

# FIG.9

THIRD EMBODIMENT OF THE INVENTION

EP 1 734 391 A1

# FIG.10

RELATED ART

# FIG.11

RELATED ART

14

# FIG.12

RELATED ART

# FIG.13

RELATED ART

**European Patent Office**

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/240069 A1 (SHIRASAKI MASATAKA ET AL) 2 December 2004 (2004-12-02) * paragraphs [0098] - [0105], [0138] - [0141], [0155] - [0163], [0200], [0201]; figures 7,8,13,17-20,36,37 * | 1 | INV. G02B6/34 |
| X | US 6 310 993 B1 (CAO SIMON X. F ET AL) 30 October 2001 (2001-10-30) * column 13 - column 18; figures 9-14 * | 1 | |
| A | US 2004/013361 A1 (CHEN YONG QIN ET AL) 22 January 2004 (2004-01-22) * the whole document * | 1-9 | |

| | |
|---|---|
| | TECHNICAL FIELDS SEARCHED (IPC) |
| | G02B |

The present search report has been drawn up for all claims

| Place of search | Date of completion of the search | Examiner |
|---|---|---|
| Berlin | 15 September 2006 | Andreassen, Jon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 734 391 A1**

**ANNEX TO THE EUROPEAN SEARCH REPORT
ON EUROPEAN PATENT APPLICATION NO.**

EP 05 02 1204

This annex lists the patent family members relating to the patent documents cited in the above-mentioned European search report.
The members are as contained in the European Patent Office EDP file on
The European Patent Office is in no way liable for these particulars which are merely given for the purpose of information.

15-09-2006

| Patent document cited in search report | | Publication date | Patent family member(s) | | Publication date |
|---|---|---|---|---|---|
| US 2004240069 | A1 | 02-12-2004 | NONE | | |
| US 6310993 | B1 | 30-10-2001 | AU | 2586101 A | 03-07-2001 |
| | | | EP | 1257857 A1 | 20-11-2002 |
| | | | WO | 0146730 A1 | 28-06-2001 |
| | | | US | 2001028759 A1 | 11-10-2001 |
| US 2004013361 | A1 | 22-01-2004 | NONE | | |

EPO FORM P0459

For more details about this annex : see Official Journal of the European Patent Office, No. 12/82

17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000511655 A
- JP 2002514323 A